# FASCICULE DE BREVET EUROPEEN

(11) **EP 1 078 438 B1**
(45) Date de publication et mention de la délivrance du brevet: **28.02.2007**
(21) Numéro de dépôt: 00910973.7
(22) Date de dépôt: 17.03.2000
(51) Int. Cl.: H02K 1/02, H02K 1/17, H02K 1/27

(54) **MACHINE TOURNANTE COMPORTANT DES AIMANTS DE COMPOSITIONS DIFFERENTES**
ROTIERENDE MASCHINE MIT MAGNETEN AUS VERSCHIEDENEN MATERIALIEN
ROTATING MACHINE COMPRISING MAGNETS WITH DIFFERENT COMPOSITIONS

(30) Priorité: 22.03.1999 FR 9903519
(43) Date de publication de la demande: 28.02.2001
(73) Titulaire: VALEO EQUIPEMENTS ELECTRIQUES MOTEUR, 94017 Creteil (FR)
(72) Inventeur: AKEMAKOU, Dokou, Antoine, F-94400 Vitry sur Seine (FR)
(74) Mandataire: Gamonal, Didier
(86) Numéro de dépôt international: PCT/FR2000/000650
(87) Numéro de publication internationale: WO 2000/057534

(56) Documents cités:
- EP-A- 0 746 079
- EP-A- 0 803 962
- WO-A1-96/30992
- DD-A- 222 745
- US-A- 4 727 273
- PATENT ABSTRACTS OF JAPAN vol. 6, no. 182 (E-131), 18 septembre 1982 (1982-09-18) & JP 57 097357 A (MATSUSHITA ELECTRIC IND CO), 17 juin 1982 (1982-06-17) cité dans la demande
- PATENT ABSTRACTS OF JAPAN vol. 1997, no. 12, 25 décembre 1997 (1997-12-25) & JP 09 205745 A (SHIBAURA ENG WORKS CO LTD), 5 août 1997 (1997-08-05)

## Description

La présente invention concerne d'une façon générale les machines électriques tournantes.

Plus précisément, l'invention concerne des machines tournantes mettant en oeuvre des aimants permanents intégrés au rotor ou au stator de la machine.

Il existe de nombreux modes de réalisation de telles machines.

Dans ces modes de réalisation connus, les aimants sont généralement réalisés exclusivement en ferrite, ou comprenant exclusivement des terres rares.

Chacun de ces deux types d'aimants possèdent des avantages spécifiques :
- à performances égales, les aimants comprenant des terres rares sont plus compacts, ce qui permet de réaliser les machines dans un encombrement moindre,
- à l'inverse, les aimants en ferrite génèrent un encombrement plus important. Mais le coût de ces aimants est sensiblement inférieur à celui des aimants comprenant des terres rares dont la mise en oeuvre provoque une augmentation du prix de revient de la machine.

En fonction des contraintes et objectifs d'encombrement et de coût liées à la conception d'une machine tournante, on choisira ainsi d'intégrer dans la machine soit des aimants en ferrite, soit des aimants comprenant des terres rares.

Dans le document JP-A-57 097357 on a réalisé une machine tournante combinant les avantages cités ci-dessus et liés aux deux types d'aimants respectifs actuellement mis en oeuvre dans les machines tournantes.

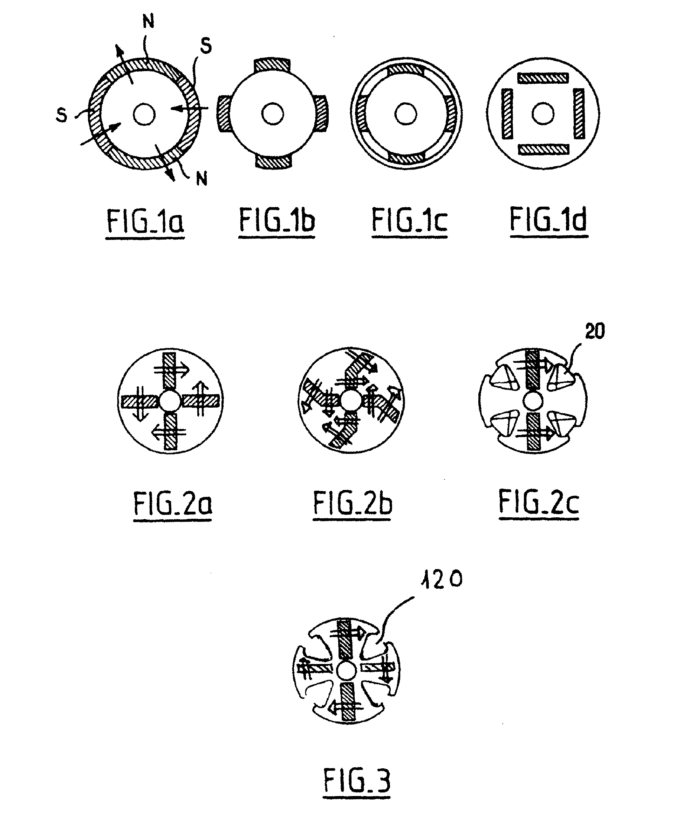

Dans ce document des aimants N(nord) et S(sud) sont disposés en alternance autour de l'axe de rotation du rotor de la machine électrique. Ces aimants N et S sont surfaciques et produisent un flux essentiellement radial comme dans les figures 1 a, 1b, 1c, 1d.

Il peut être souhaitable d'optimiser encore cette combinaison pour notamment réduire encore les coûts.

On connaît également du document EP 0 746 079 une machine électrique tournante comportant notamment un stator et un rotor, le rotor comportant des aimants permanents, dont la composition est en neodymium ou en ferrite. Plus particulièrement, le rotor comporte des sous-ensembles comprenant une combinaison d'aimants de ferrite et de neodymium.

Le document DD 222745 montre également une machine électrique comportant une combinaison d'aimants de types différents.

Afin d'atteindre ce but, l'invention propose une machine électrique tournante, notamment un alternateur ou un alterno-démarreur de véhicule automobile, selon la revendication 1. Par orthoradial on entend ici que le flux généré par l'aimant permanent concerné est perpendiculaire à une direction radiale.

Grâce à l'invention on obtient une plus grande concentration des flux magnétiques ce qui permet de réduire encore plus le volume des aimants en terre rare et donc les coûts, tout en augmentant les performances de la machine.

D'autres aspects, buts et avantages de l'invention apparaîtront mieux à la lecture de la description suivante de modes de réalisation préférés de l'invention, faite en référence aux dessins annexés sur lesquels :
- les figures 1a à 1d sont quatre représentations schématiques d'un premier mode connu d'implantation d'aimants dans une machine tournante,
- les figures 2a à 2c sont trois représentations schématiques d'un deuxième mode connu d'implantation d'aimants dans une machine tournante,
- la figure 3 est une représentation schématique d'une variante du deuxième mode connu d'implantation d'aimants dans une machine tournante,
- les figures 4a à 4c sont trois représentations schématiques montrant respectivement un mode d'implantation connu d'aimant surfacique à flux orthoradial, et deux autres variantes d'implantation d'aimants dans une machine tournante, générant un flux orthoradial sensiblement équivalent,
- la figure 5 est une représentation schématique partielle d'une machine tournante mettant en oeuvre des aimants,
- les figures 6a et 6b sont deux vues de détail montrant respectivement deux variantes de configuration des aimants selon l'invention dans une machine similaire à celle de la figure 5
- la figure 7 est une vue partielle montrant l'implantation d'aimants dans un stator.

En référence aux figures 1a à 3, on va maintenant décrire brièvement les trois principaux modes connus d'implantation d'aimants dans une machine électrique tournante. Dans les exemples présentés ci-dessous, les aimants sont intégrés au rotor de la machine ; cependant, il est également possible de mettre en oeuvre ces modes connus d'implantation en intégrant des aimants dans le stator de la machine.

Les figures 1 a à 1 d montrent quatre configurations dans lesquelles des aimants N nord et S Sud sont disposés en alternance autour de l'axe de rotation du rotor. Dans ce premier type de configuration, les aimants produisent un flux essentiellement radial. Sur les figures 1a et 1b, les aimants N Nord et S Sud sont surfaciques, alors qu'ils sont enterrés dans les configurations des figures 1 c et 1d.

Les figures 2a et 2b montrent quant à elles trois configurations permettant de produire un flux magnétique essentiellement orthoradial. On remarquera que dans le mode de réalisation de la figure 2c, le rotor est muni de bobinages d'excitation 20, alimentés par l'intermédiaire de balais (non représentés).

Enfin on peut supprimer les bobinages 20 de la figure 2c et, comme décrit dans le document FR98 13119 déposé le 20 octobre 1998, agencer radialement les aimants de façon à engendrer des flux magnétiques ayant tous le même sens, par exemple le sens horaire, avec alternance de cavités imperméables aux flux magnétiques.

Dans les figures 2a à 3, on a représenté par des flèches le sens des flux magnétiques.

Il existe bien entendu un nombre potentiellement illimité de configurations des aimants, dérivées des modes principaux d'implantation décrit ci-dessus.

Comme on l'a dit, les machines existantes mettent en oeuvre soit des aimants en ferrite, soit des aimants comprenant des terres rares. Afin de permettre d'élaborer des machines tournantes présentant à la fois un prix de revient inférieur à celui des machines mettant en oeuvre exclusivement des aimants comprenant des terres rares, et un encombrement inférieur à celui des machines à aimants en ferrite, une caractéristique essentielle de l'invention consiste à intégrer dans une machine tournante une combinaison adaptée d'aimants de compositions (ferrite et terres rares) différentes.

Une telle combinaison doit permettre de réconcilier au mieux les contraintes de coûts et de performances.

Il est également important selon l'invention qu'une telle combinaison d'aimants de compositions différentes ne dégrade pas sensiblement les performances de la machine en termes de bruit magnétique, du fait de la création de « balourds magnétiques ». On va ainsi voir ci-dessous que les combinaisons préférées selon l'invention permettent de préserver la machine d'un bruit magnétique excessif, grâce à une répartition judicieuse des aimants autour de l'axe de rotation du rotor.

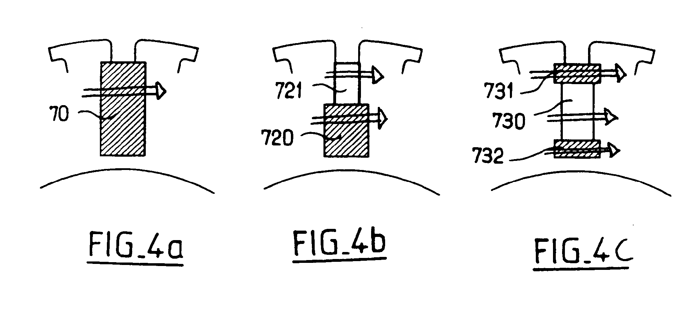

Dans la suite de ce texte, on va décrire des solutions générales préférées dans lesquelles on combine efficacement des aimants de compositions différentes. Par souci de clarté, on a représenté sur les figures 4a à 7 les aimants de type ferrite en hachuré, les aimants comprenant des terres rares étant représentés en blanc.

Une première solution générale consiste à remplacer individuellement chaque aimant par une combinaison adaptée de plusieurs aimants de compositions différentes.

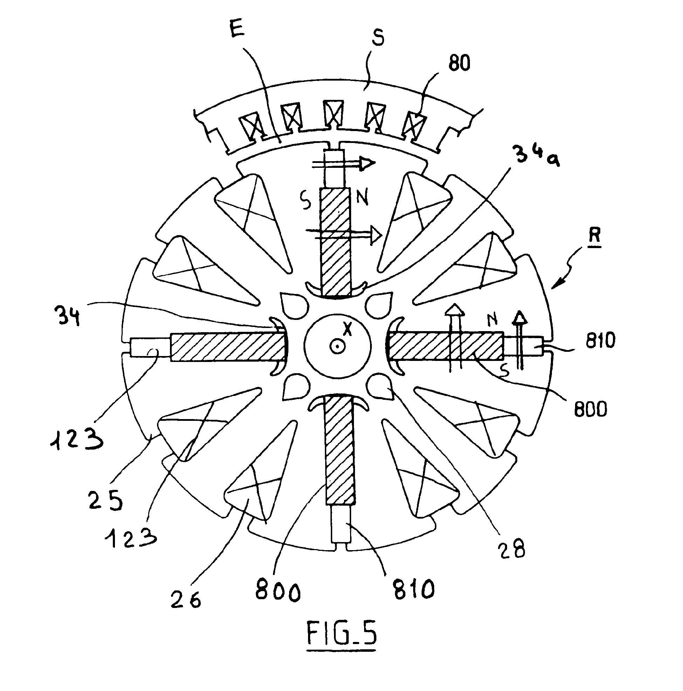

La machine électrique tournante comporte, de manière connue, un rotor R, un stator S (figure 5) et un entrefer E entre le rotor et le stator. Le rotor est porté par un arbre définissant l'axe du rotor.

Plus précisément, il est possible de remplacer un aimant en ferrite 70 enterré dans le rotor et contribuant à produire un flux orthoradial, c'est-à-dire perpendiculaire à une direction radiale, tel que représenté sur la figure 4a par :
- la superposition dans la direction radiale d'un aimant 720 en ferrite enterré situé à proximité de l'arbre du rotor, et d'un deuxième aimant 721 comprenant des terres rares placé à proximité de l'entrefer et donc de la surface externe du rotor pour établir efficacement un flux magnétique avec le stator. Ce type de superposition est représenté sur la figure 4b, les deux aimants ayant une aimantation orthoradiale,
- ou encore par une superposition, toujours selon la direction radiale, dans laquelle un aimant comprenant des terres rares 730 est entouré de deux aimants 731 et 732 en ferrite, comme représenté sur la figure 4c, les trois aimants ayant là aussi une aimantation orthoradiale.

En variante à la lumière de la figure 2b, l'aimant du second groupe peut être implanté radialement, pour générer un flux magnétique orthoradial, tandis que l'aimant du premier groupe est incliné par rapport à une direction radiale et prolonge radialement vers l'extérieur l'aimant du second groupe. On remplace les aimants de la figure 2b par les sous-ensembles selon l'invention.

Dans tous les cas, il est formé une pluralité de sous-ensembles d'aimants permanents, chaque sous-ensemble combinant un aimant permanent d'un premier groupe (celui des terres rares) avec au moins un aimant permanent du deuxième groupe (celui des ferrites), l'un au moins desdits aimants étant agencé radialement pour générer un flux magnétique orthoradial. L'aimantation dudit aimant est donc orthoradiale comme le montre les flèches.

La figure 5 montre un exemple dans une machine hybride à double excitation par bobinages et par aimants du type de celle décrite dans le document FR99 02345.

Le stator S de cette machine est de type connu en soi ; il s'agit ici d'un stator triphasé dans lequel des bobinages 80 sont enroulés autour de dents du stator en étant montés dans les rainures séparant deux à deux les dents. Le rotor R comporte ici quatre combinaisons d'aimants enterrés correspondant à la représentation de la figure 4b : chacune de ces combinaisons superpose selon une direction radiale un aimant en ferrite 800 situé à proximité de l'axe de rotation X, et un deuxième aimant comprenant des terres rares 810 situé à proximité de l'entrefer de la machine.

La machine représentée sur la figure 5 a ainsi des performances magnétiques accrues par rapport à une machine à flux orthoradial ne comportant que des aimants en ferrite, et son coût est sensiblement inférieur à celui d'une machine mettant en oeuvre uniquement des aimants comprenant des terres rares.

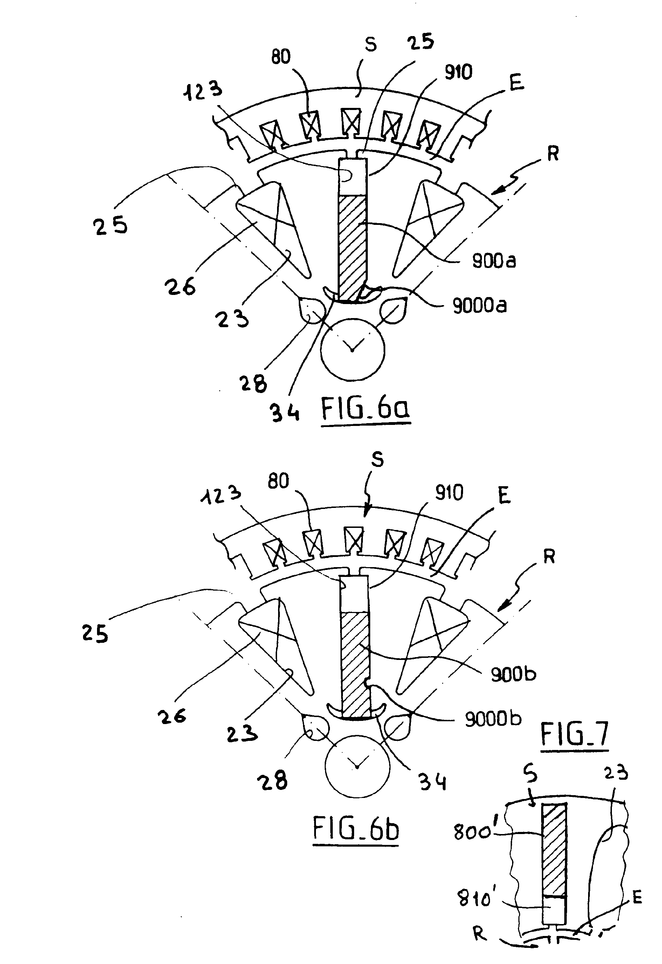

En référence aux figures 6a et 6b, on a représenté deux variantes de réalisation d'aimants à mettre en oeuvre dans une machine électrique tournante similaire à celle de la figure 5, permettant d'utiliser des aimants de compositions différentes ayant la même épaisseur. Il s'avère alors avantageux de prévoir des moyens de détrompage sur l'un des deux aimants, par exemple sur l'aimant en ferrite pour ne pas intervertir les aimants des deux groupes.

La figure 6a représente ainsi une superposition d'un aimant en ferrite 900a et d'un aimant comprenant des terres rares 910, l'aimant en ferrite ayant son extrémité proche de l'axe de rotation, au moins partiellement biseautée (biseau 9000a). Dans ce cas, les formes des tôles du rotor sont adaptées pour être complémentaires de la géométrie de l'aimant 900a.

La figure 6b présente une deuxième variante de réalisation, les moyens de détrompage résidant ici dans une encoche 9000b pratiquée sur un côté de l'aimant en ferrite 900b, le rotor R présentant alors en vis-à-vis d'une encoche 9000b une saillie (non référencée) pénétrant de manière complémentaire dans l'encoche.

Il est évidemment possible de prévoir tout autre moyen de détrompage à la portée de l'homme du métier, sur l'un ou l'autre des aimants, afin d'éviter d'intervertir les aimants lors de leur introduction dans les encoches du rotor.

Il apparaît ainsi qu'une combinaison judicieuse d'aimants de compositions différentes dans une machine tournante permet selon l'invention à la fois de réduire l'encombrement par rapport à une machine mettant en oeuvre exclusivement des aimants en ferrite, et de réduire sensiblement le prix de revient de la machine par rapport à une machine mettant en oeuvre exclusivement des aimants comprenant des terres rares.

Comme on l'a dit, bien que les exemples décrits ci-dessus mettent en oeuvre des aimants exclusivement dans le rotor, il est également possible selon l'invention d'intégrer de telles combinaisons dans le stator de la machine.

Ainsi dans ce cas (figure 7) les aimants en terres rares 810', de plus petite taille, sont implantés au voisinage de l'entrefer E et du rotor et les aimants en ferrite 800' sont enterrés dans le stator.

L'invention trouve une application particulièrement avantageuse dans le domaine des alternateurs et des moteurs à aimants, notamment dans le domaine automobile.

Dans les figures 4a à 6b les aimants permanents sont disposés radialement en sorte que leur aimantation est orthoradiale c'est-à-dire perpendiculaire à un rayon.

A la figure 5 les combinaisons aimant en ferrite 800 - aimant en terre rare 801 sont réparties avec une polarité alternée sur le pourtour du rotor, les flux générés par deux combinaisons successives d'aimants permanents ayant, selon la direction de déplacement du rotor, des composantes opposées. Pour plus de précisions on se reportera au document FR99 02345 précité déposé le 25 février 1999.

Ainsi les combinaisons d'aimants permanents superposés 800,801 alternent avec des paires de brins de bobinages d'excitation 26 reçues dans des encoches 23 séparées par des pôles saillants 25.

Les combinaisons d'aimants 800,801 sont également reçues dans des logements en forme d'encoches 123, étagées radialement pour logement d'un aimant permanent en terre rare moins haut et moins large que l'aimant en ferrite c'est-à-dire de plus petite taille que les aimants en ferrite comme dans les figures 6a et 6b.

Comme indiqué dans le document FR99 02345 précité on passe d'une polarité NNN-SSS etc., en l'absence d'excitation à une polarité N-S-N-S etc. lorsque les bobinages 26 du rotor sont excités.

Comme décrit dans ce document des trous 28 s'étendent au voisinage de l'arbre du rotor et sont répartis entre les combinaisons d'aimants permanents. Les trous définissent des zones amagnétiques avec des surfaces d'étranglement limitant les flux magnétiques vers l'arbre A.

Les logements 123 pour les aimants permanents se terminent intérieurement chacun avec une ouverture élargie 34, de forme générale incurvée, qui se replie en 34a de part et d'autre des aimants 800 pour optimiser les lignes de champs. Tout ceci permet d'optimiser la tenue mécanique à la centrifugation, sachant que les aimants en terre rare sont retenus dans les figures 5 à 6b radialement vers l'extérieur par les pôles saillants 25 et vers l'intérieur par les aimants en ferrite.

A la figure 4b les aimants en terre rare sont immobilisés radialement par les aimants en ferrite 731,732 plus larges, les encoches étant étagées en conséquence. Ces ferrites 731,732 sont ici à aimantation orthoradiale et génèrent donc des flux magnétiques orthoradiaux.

Ainsi qu'on l'aura compris, du fait de l'aimantation orthoradiale (perpendiculaire à un rayon) la concentration des flux magnétiques réduit beaucoup plus le volume des aimants en terre rare, notamment beaucoup plus que dans la configuration où les deux types d'aimants sont surfaciques. En outre les aimants en ferrite sont plus efficaces du fait de la concentration des flux magnétiques dans les solutions décrites que dans une configuration surfacique.

On peut homogénéiser le flux magnétique au niveau de l'entrefer entre le stator et le rotor en jouant, d'une part, principalement sur la hauteur des aimants en ferrite et en terres rares, et, d'autre part, sur la distance circonférentielle entre les encoches 23 et les aimants en ferrite, le flux engendré par les aimants en ferrite pouvant être égal à celui développé par les aimants en terre rare.

En variante on peut appliquer les dispositions des figures 4b et 4c aux aimants de la figure 3 où les aimants sont tous orientés dans le sens horaire.

## Revendications

1. Machine électrique tournante, notamment un alternateur ou un alterno-démarreur de véhicule automobile, comprenant un stator (S), un rotor (R), un entrefer (E) entre le stator (S) et le rotor (R) et des aimants permanents intégrés dans le rotor et/ou dans le stator, dans lequel les aimants constituent au moins deux groupes définis chacun par un type de composition spécifique, dont un premier groupe d'aimants comprenant des terres rares et un deuxième groupe d'aimants en ferrite, rotor et/ou stator dans lequel il est prévu une pluralité de sous-ensembles (720,721 - 731,730,732-800,810...), chaque sous-ensemble combinant au moins un aimant du premier groupe avec un aimant du second groupe, l'un au moins des aimants étant agencé radialement pour générer un flux magnétique orthoradial, ***caractérisée en ce que*** chaque sous-ensemble comprend une superposition selon une direction généralement radiale d'un aimant comprenant des terres rares (910) situé à proximité de l'entrefer (E), et d'un aimant en ferrite (900a, 900b), de même épaisseur que l'aimant en terres rares, ledit aimant en ferrite comprenant des moyens de détrompage, notamment une partie biseautée (9000a) ou une rainure (9000b).

2. Machine électrique selon la revendication 1, **caractérisée en ce que** chaque sous-ensemble comprend une superposition selon une direction généralement radiale d'un aimant comprenant des terres rares (721, 810) situé à proximité de l'entrefer (E) et d'un aimant en ferrite (720, 800).

3. Machine électrique selon la revendication 1, **caractérisée en ce que** chaque sous-ensemble comprend une superposition selon une direction radiale d'un aimant comprenant des terres rares (730) entouré de deux aimants en ferrite (731, 732).

4. Machine électrique selon l'une quelconque des revendications 1 à 3, **caractérisée en ce que** le premier groupe d'aimants en terres rares a une plus petite taille que le deuxième groupe d'aimants en ferrite.

5. Machine électrique selon la revendication 1, **caractérisée en ce que** les sous-ensembles sont montés dans le rotor (R) et que chaque sous-ensemble comprend une superposition selon une direction générale radiale d'un aimant du premier groupe (721,810...) situé à proximité de la surface du rotor (R) et d'un aimant en ferrite (720,800) situé à proximité de l'axe de rotation du rotor.

6. Machine électrique selon l'une quelconque des revendications précédentes, **caractérisé en ce que** le rotor comporte en outre au moins un bobinage d'excitation (26).

7. Machine électrique selon l'une quelconque des revendications précédentes, **caractérisé en ce que** le rotor comporte une alternance de sous ensembles d'aimants (800, 810...) et de bobinage d'excitation (26).

8. Machine électrique selon l'une quelconque des revendications précédentes, **caractérisé en ce que** des trous (28) s'étendent au voisinage ed l'arbre du rotor et sont répartis entre les sous ensembles d'aimants.

## Claims

1. Electrical rotating machine, particularly a motor vehicle alternator or starter-alternator, including a stator (S), a rotor (R), an air gap (E) between the stator (S) and the rotor (R) and permanent magnets integrated into the rotor and/or into the stator, in which the magnets constitute at least two groups each defined by a specific type of composition, with a first group of magnets including rare earths and a second group of ferrite magnets, rotor and/or stator in which provision is made for a plurality of sub-assemblies (720, 721 - 731,730,732-800,810 etc.), each sub-assembly combining at least one magnet of the first group with a magnet of the second group, at least one of the magnets being arranged radially so as to generate an orthoradial magnetic flux, ***characterised in that** each sub-assembly includes a stacking along a generally radial direction of a magnet including rare earths (910) located in proximity to the air gap (E), and a ferrite magnet (900a,900b), of the same thickness as the rare earth magnet, said ferrite magnet including mounting polarization means, particularly a bevelled part (9000a) or a groove (9000b) .*

2. Electrical machine according to claim 1, **characterised in that** each sub-assembly includes a stacking along a generally radial direction of a magnet including rare earths (721,810) located in proximity to the air gap (E) and a ferrite magnet (720,800).

3. Electrical machine according to claim 1, **characterised in that** each sub-assembly includes a stacking along a radial direction of a magnet including rare earths (730) surrounded by two ferrite magnets (731,732).

4. Electrical machine according to any one of claims 1 to 3, **characterised in that** the first group of rare earth magnets is smaller in size than the second group of ferrite magnets.

5. Electrical machine according to claim 1, **characterised in that** the *sub-assemblies are mounted in the rotor (R) and that* each sub-assembly includes a stacking along a generally radial direction of a magnet of the first group (721,810 etc.) located in proximity to the surface of the rotor (R) and a ferrite magnet (720,800) located in proximity to the axis of rotation of the rotor.

6. Electrical machine according to any one of the previous claims, **characterised in that** the rotor additionally comprises at least one field coil (26).

7. Electrical machine according to any one of the previous claims, **characterised in that** the rotor comprises alternating magnet sub-assemblies (800,810 etc.) and field coil (26).

8. Electrical machine according to any one of the previous claims, **characterised in that** holes (28) extend in the vicinity of the rotor shaft and are distributed between the magnet sub-assemblies.

## Patentansprüche

1. Rotierende elektrische Maschine, insbesondere ein Wechselstromgenerator oder ein Anlassergenerator für Kraftfahrzeuge, umfassend einen Stator (S), einen Rotor (R), einen Luftspalt (E) zwischen dem Stator (S) und dem Rotor (R) und in den Rotor und/oder in den Stator integrierte Permanentmagnete, wobei die Magnete wenigstens zwei Gruppen bilden, die jeweils durch eine spezifische Art der Zusammensetzung definiert sind, darunter eine erste Gruppe von Magneten, die Seltenerden enthalten, und eine zweite Gruppe von Magneten aus Ferrit, wobei in dem Rotor und/oder in dem Stator eine Mehrzahl von Unterbaugruppen (720, 721 - 731, 730, 732 - 800, 810 ...) vorgesehen ist, wobei jede Unterbaugruppe wenigstens einen Magneten der ersten Gruppe mit einem Magneten der zweiten Gruppe kombiniert, wobei wenigstens einer der Magnete radial angeordnet ist, um einen orthoradialen magnetischen Fluss zu erzeugen, **dadurch gekennzeichnet, dass** jede Unterbaugruppe eine entlang einer allgemein radialen Richtung ausgeführte Übereinanderlagerung eines in der Nähe des Luftspalts (E) befindlichen Magneten mit Seltenerden (910) und eines Magneten aus Ferrit (900a, 900b) mit der gleichen Dicke wie der Magnet aus Seltenerden umfasst, wobei der besagte Magnet aus Ferrit Einbaumarkierungsmittel, insbesondere einen abgeschrägten Tel (9000a) oder eine Nut (9000b), enthält.

2. Elektrische Maschine nach Anspruch 1, **dadurch gekennzeichnet, dass** jede Unterbaugruppe eine entlang einer allgemein radialen Richtung ausgeführte Übereinanderlagerung eines in der Nähe des Luftspalts (E) befindlichen Magneten mit Seltenerden (721, 810) und eines Magneten aus Ferrit (720, 800) umfasst.

3. Elektrische Maschine nach Anspruch 1, **dadurch gekennzeichnet, dass** jede Unterbaugruppe eine entlang einer radialen Richtung ausgeführte Übereinanderlagerung eines Magneten mit Seltenerden (730), umgeben von zwei Magneten aus Ferrit (731, 732), umfasst.

4. Elektrische Maschine nach einem der Ansprüche 1 bis 3, **dadurch gekennzeichnet, dass** die erste Gruppe von Magneten aus Seltenerden eine kleinere Größe als die zweite Gruppe von Magneten aus Ferrit aufweist.

5. Elektrische Maschine nach Anspruch 1, **dadurch gekennzeichnet, dass** die Unterbaugruppen in den Rotor (R) eingebaut sind und dass jede Unterbaugruppe eine entlang einer allgemeinen radialen Richtung ausgeführte Übereinanderlagerung eines in der Nähe der Oberfläche des Rotors (R) befindlichen Magneten der ersten Gruppe (721, 810 ...) und eines in der Nähe der Drehachse des Rotors befindlichen Magneten aus Ferrit (720, 800) umfasst.

6. Elektrische Maschine nach einem der vorangehenden Ansprüche, **dadurch gekennzeichnet, dass** der Rotor außerdem wenigstens eine Erregerspule (26) umfasst.

7. Elektrische Maschine nach einem der vorangehenden Ansprüche, **dadurch gekennzeichnet, dass** der Rotor eine abwechselnde Folge von Unterbaugruppen aus Magneten (800, 810 ...) und Erregerspulen (26) umfasst.

8. Elektrische Maschine nach einem der vorangehenden Ansprüche, **dadurch gekennzeichnet, dass** zwischen den Unterbaugruppen aus Magneten Löcher (28) verteilt sind, die sich in der Nähe der Welle des Rotors erstrecken.
